# EUROPÄISCHE PATENTSCHRIFT

(11) **EP 1 886 573 B1**
(45) Veröffentlichungstag und Bekanntmachung des Hinweises auf die Patenterteilung: **21.10.2009**
(21) Anmeldenummer: 07015727.6
(22) Anmeldetag: 09.08.2007
(51) Int. Cl.: A22C 11/12

(54) **Clipmaschine**
Clipping machine
Machine de fermeture par clip

(30) Priorität: 10.08.2006 DE 202006012324 U
(43) Veröffentlichungstag der Anmeldung: 13.02.2008
(73) Patentinhaber: Poly-clip System GmbH & Co. KG, 60489 Frankfurt am Main (DE)
(72) Erfinder: Ebert, Detlef, 61231 Bad Nauheim (DE); Hummel, Michael, 65479 Raunheim (DE)
(74) Vertreter: Fritsche, Rainer

(56) Entgegenhaltungen:
- EP-A- 0 302 966
- EP-A- 1 095 570
- EP-A1- 0 900 733
- DE-C1- 10 131 807
- US-A- 3 377 692
- US-A1- 2005 274 088

## Beschreibung

Die Erfindung betrifft eine Clipmaschine zum Abteilen und Verschließen einer mit Füllgut befüllten schlauchförmigen Verpackung (Verpackungsschlauch) mit wenigstens zwei bezogen auf die Achse des Verpackungsschlauches (Schlauchachse) axial beabstandeten Paaren von radial gegenüberliegenden Verdrängerelementen, welche mit einer Linearführung verbunden und eingerichtet sind, zum lokalen Einschnüren der gefüllten Verpackung und Bilden eines Schlauchzopfes radial linear aufeinander zu und anschließend paarweise axial auseinander gefahren (gespreizt) zu werden, einem ersten und einem zweiten Verschließwerkzeug, welche eingerichtet sind, zum Setzen und Verschließen wenigstens einer Verschlussklammer (Clip) um den gebildeten Schlauchzopf zwischen den axial auseinander gefahrenen Verdrängerelementepaaren radial aufeinander zu gefahren zu werden.

Clipmaschinen dieser Art sind beispielsweise aus der DE 196 44 074 C1 oder EP-A-900 733 bekannt. Solche Clipmaschinen werden dazu verwendet, mit flüssigem bis zähpastösem oder auch (teilweise) granularem Inhalt befüllte schlauchförmige Verpackungsschläuche, Därme oder Kunstdärme - also Würste - zu verschließen.

Zunächst wird bei diesem Vorgang das Füllgut in die Verpackung eingebracht (Füllen), welche danach mittels der Verdrängerelemente in Portionen abgeteilt wird (Verdrängen). Die Verdrängerelemente jedes Paares haben einander zugewandte V-förmige Ausschnitte, mit denen sie die Schlauchhülle beim linearen radialen Zusammenfahren einschnüren und das in dem Einschnürbereich befindliche Füllgut in axialer Richtung verdrängen (alle Richtungsangaben beziehen sich hierin auf die Schlauchachse). Durch anschließendes axiales Auseinanderfahren der beiden Verdrängerelementepaare wird ein verlängerter Schlauchzopf gebildet, auf welchen im nächsten Arbeitstakt ein oder im Fall einer "Doppelclipanordnung" zwei Verschlusselemente mittels entsprechender Verschließwerkzeuge aufgebracht werden.

Das erste Verschließwerkzeug (Matrize) und das zweite Verschließwerkzeug (Stempel) ist bei dieser Maschinengattung bekanntlich quer zur Linearbewegung der Verdrängerelemente angetrieben. Die Verschließwerkzeuge befinden sich während des Füllens und überwiegend auch noch während des Verdrängens in ihrer Öffnungsstellung, aus der sie in ihre Verschlussstellung gebracht werden, wobei der Clip beim Erreichen der Verschlussstellung umgeformt wird. Nach dem Verschließen werden die Verschließhebel mit den Verschließwerkzeugen in ihre Ausgangs- oder Öffnungsstellung zurückgeführt.

Mit der eingangs beschriebenen Clipmaschine werden typischerweise Clips verarbeitet, die aus einem geprägten Aluminiumdrahtstrang gefertigt werden, bei dem die Clips U-förmig vorgebogen sind und mittels an ihren Schenkelenden abgekröpften Stegen zusammenhängen. Der so gebildete Clipstrang wird dem ersten Verschließwerkzeug, der Matrize, entlang einer Führungsbahn zugeführt, die in den Bereich des zugeordneten Verschließwerkzeugs mündet.

Der vorderste Clip wird beim Transport des Clipstrangs der Matrize bekanntermaßen von einem intermittierend eingreifenden Vorschubmittel zugeführt. Solange der vorderste Clip noch mit dem nachfolgenden Clipstrang verbunden ist, wird er von diesem stabil in der Matrize gehalten. Beim Verschließen wird zunächst die Matrize in ihre Verschluß- oder Hubendstellung gefahren. In dieser Stellung wird der vorderste Clip gegen den Schlauchzopf gedrückt und ist zwischen diesem und der Matrize eingespannt.

Zeitversetzt, d.h. noch während die Matrize in dieser Stellung verharrt, bewegt sich der Stempel auf die Matrize zu. Unmittelbar vor dem Verschließen des Clips wird zunächst mittels einer an den Verschließwerkzeugen vorgesehenen Schervorrichtung der vorderste Clip von dem nachfolgenden Clipstrang abgetrennt. In diesem Moment ist der vorderste Clip frei und wird nur noch durch die Spannung des Schlauchzopfes gegen die Matrize angedrückt. Sodann wird der Clip durch eine weitere Annäherung des Stempels an die Matrize verformt, bis sich die Verschließwerkzeuge bis auf die Klammerhöhe angenähert haben und der Clip um den Schlauchzopf herum verschlossen ist.

Beim Verschließvorgang werden die Stege der Schenkelenden des Clips gegen die Außenseite der Klammerschenkel gepresst und mit diesen um den Zopf des Verpackungsmaterials gebogen, wobei die Schenkelenden und Stegabschnitte stumpf gegeneinander gepresst und dabei gestaucht werden, so dass ein den Zopf des Verpackungsmaterials möglichst dicht zusammenpressender Ring entsteht.

In bestimmten Fällen, namentlich bei relativ steifen Verpackungsmaterial, kann es jedoch zu Fehlfunktionen insbesondere dadurch kommen, dass der von den Verdrängerelementen gebildete und in die noch offene Verschlussklammer eingelegte Schlauchzopf, insbesondere im Bereich der Überlappung der jeweils paarweise zusammenwirkenden Verdrängerelemente, ein wenig entrafft wird. Beim nachfolgenden Verschließen des Clips um den Schlauchzopf besteht somit eine Gefahr, dass Verpackungsmaterial verletzt wird und/oder nicht vollständig von dem verschlossenen Clip umfasst wird, so dass der Verschluss nicht dicht ist.

Dieses Problem ist bekannt. Beispielsweise in der EP 1 140 633 B1 wird versucht dem abzuhelfen, indem vor dem Verschließen des Clips der Schlauchzopf axial neben der Verschlussklammer mittels neben den Verschließwerkzeugen angeordnetem Niederhalter zur Ebene des Klammerbodens hin gedrückt wird, so dass sich der Zopf nicht zur Öffnung der zunächst noch unverschlossenen Klammer entfalten kann. Jedoch erfordert die Verarbeitung verschiedener Verpackungsschlauchmaterialien und/oder Schlauchquerschnitte eine Anpassung des Niederhalters an den entsprechenden Zopfquerschnitt. Ein Werkzeugwechsel ist wegen der potentiellen Gefahr von Fehlmanipulation grundsätzlich unerwünscht.

Aufgabe der vorliegenden Erfindung ist es demnach, den Verschließvorgang auf einfache Weise prozesssicherer zu gestalten.

Die Aufgabe wird bei einer Clipmaschine der eingangs genannten Art dadurch gelöst, dass die radiale Bewegungsrichtung der Verdrängerelementepaare im wesentlichen mit der Bewegungsrichtung der Verschließwerkzeuge zusammenfällt.

Der Erfindung liegt die Erkenntnis zugrunde, dass ein Hauptgrund für das Entfalten des Schlauchzopfes in der Orientierung der paarweise zusammenwirkenden, scherenartig überlappenden Verdrängerelementen liegt. Begünstigt durch das axiale Auseinanderbewegen der Verdrängerelemente und der damit verbundnen Relativbewegung zwischen dem Schlauchzopf und Verdrängerelementen jedes Paares, neigt das Schlauchhüllenmaterial dazu, in den Spalt zwischen den zusammenwirkenden Verdrängerscheren einzudringen. Dabei kommt es lokal zu der zuvor genannten Entfaltung oder Entraffung. Da bei den bisher bekannten Clipmaschinen der eingangs genannten Art die Auf-/Zubewegung der Verdrängerscheren einerseits und die Bewegung der Verschließwerkzeuge andererseits orthogonal zueinander erfolgte, lag der Spalt der paarweise scherenartig überlappenden Verdrängerelemente immer in der Richtung der Bewegung der Verschließwerkzeuge. Entsprechend fand auch die Entfaltung im wesentlichen in dieser Richtung statt. Die Ausdehnung des gerafften Zopfes war in der Folge in Richtung der vor dem Verschließen noch offenen Klammerschenkel größer als in der dazu senkrechten Richtung. Genau diese Ausdehnung jedoch bewirkt, dass die Klammerschenkel beim Umbiegen unter Umständen eine Falte des Zopfes einklemmen und beschädigen konnten.

Demgegenüber liegt die Ebene der größten Zopfausdehnung bei der erfindungsgemäßen Anordnung der Verdrängerelemente bzw. deren Bewegungsrichtung quer zu den Klammerschenkeln der offenen Clips, so dass die Gefahr der Beschädigung der Verpackungshülle vermindert wird. Hierdurch wird ferner die Verwendung eines Clips mit kürzeren Schenkeln, insbesondere zum Verschließen eines dünnen Zopfes, begünstigt, wodurch weniger Staucharbeit beim Verschließvorgang benötigt wird und daher der Verscheiß verringert werden kann.

Neben den genannten Vorteilen hat die erfindungsgemäße Vorrichtung aufgrund derselben Bewegungsrichtung aller beim Verschließen eingreifender Elemente ferner den Vorzug geringerer räumlicher Abmessungen.

Zwar ist beispielsweise aus der DE 101 31 807 C1 eine Clipmaschine anderer Gattung bekannt, bei der die Verschließwerkzeuge und die Verdrängerelemente eine kinematisch gekoppelte Baugruppe bilden, die, um zwei Kurbeln drehbar gelagert, eine synchrone Bewegung ausführt. Deshalb fallen auch hier die Bewegungsrichtungen der Verdrängerelemente und der Verschließwerkzeuge zusammen. Jedoch handelt es sich hierbei um eine Clipmaschine anderer Gattung, bei der insbesondere eine Spreizbewegung der Verdrängerelemente nicht vorgesehen und technisch auch nicht möglich ist. Deshalb kann mit einer solchen Clipmaschine kein brätfreier Zopf gebildet werden, was die Verarbeitung von Rohwurstprodukten ausschließt. Hierfür sind eigens die eingangs genannten Maschinen vorgesehen.

Das erste Verschließwerkzeug ist vorzugsweise an einem ersten (unteren) Verschließhebel befestigt und mit diesem schwenkbar gelagert und angetrieben.

Bei dieser Ausgestaltung wird der Clipstrang der Matrize vorteilhafter Weise entlang einer Führungsbahn zugeführt, die im Bereich der Schwenkachse des Verschließhebels beginnt. Dies vereinfacht die Zuführung, da die Schwenkachse ortsfest ist.

Bevorzugt ist das zweite Verschließwerkzeug mit einer Linearführung verbunden.

Das zweite Verschließwerkzeug, der Stempel, kann zwar auch an einem zweiten (oberen) Verschließhebel befestigt und mit diesem um die gemeinsame Schwenkachse beider Verschließhebel schwenkbar gelagert und angetrieben werden. Eine lineare Hin- und Herbewegung des Stempels verbessert jedoch die Kinematik unter dem Gesichtspunkt einer gleichmäßigeren Umformung der Clips. Dies macht sich bei Verwendung unterschiedlicher Clipgrößen bemerkbar, welche je nach Schenkellänge des unverformten Clips bewirkt, dass sich der Öffnungswinkel der beiden schwenkbaren Verschließhebel im Moment des Kontakts des Stempels mit dem Clip ändert, so dass dieser nicht gleichzeitig an beiden Schenkeln angreift. Dadurch tritt ein unerwünschtes Kipp- oder Drehmoment beim Verschließen auf.

Wird die Bewegung des zweiten Verschließwerkzeugs hingegen linear ausgeführt, vorzugsweise senkrecht auf eine gedachte Verbindungslinie der Schenkelenden eines in das erste Verschließwerkzeug (die Matrize) eingelegten Clips ausgerichtet, wird die geschilderte Fehlerquelle vermieden, da sich die Winkelstellung der Verschließwerkzeuge zueinander nach der zuerst beendeten Schwenkbewegung des unteren Verschließwerkzeugs nicht mehr verändert.

In einer vorteilhaften Weiterbildung weist die Clipmaschine eine Steuerung auf, die eingerichtet ist, die Verschließwerkzeuge zeitlich überlappend mit der radialen Zufahrbewegung und/oder der axialen Auseinanderfahrbewegung der Verdrängerelementepaare radial aufeinander zu zu fahren.

Da die einander zugewandte V-förmigen Ausschnitte der Verdrängerelemente vorzugsweise Öffnungswinkel aufweisen, die kleiner als 90° sind, ist deren Öffnungsquerschnitt in Bewegungsrichtung größer als senkrecht dazu. Da erfindungsgemäß die Bewegungsrichtung der Verschließwerkzeuge mit der der Verdrängerelemente zusammenfällt, wird ein größerer Verstellweg der Verschließwerkzeuge erforderlich, um den Öffnungsquerschnitt vollständig freizugeben. Der mit dem größeren Verstellweg verbundene Zeitverlust kann durch zeitliche Überlagerung der Bewegungen der Verdrängerelemente einerseits und der Verschließwerkzeuge andererseits zumindest teilweise kompensiert werden.

In diesem Bewegungsabschnitt können die Verschließwerkzeuge maximal dem Hub der Zufahrbewegung der Verdrängerelementepaare folgen. Zeitlich kann die Steuerung vorsehen, dass die Verschließwerkzeuge den Verdrängerelementen beim Zusammenfahren synchron mit gleicher Geschwindigkeit folgen. Grundsätzlich kann aber die gesamte Zeitspanne der radialen Zufahrbewegung und der axialen Auseinanderfahrbewegung der Verdrängerelementepaare für die Folgebewegung genutzt werden.

Weitere Merkmale und Vorteile der Erfindung werden nachfolgend anhand eines Ausführungsbeispiels mit Hilfe der Zeichnungen näher erläutert.

Es zeigen:

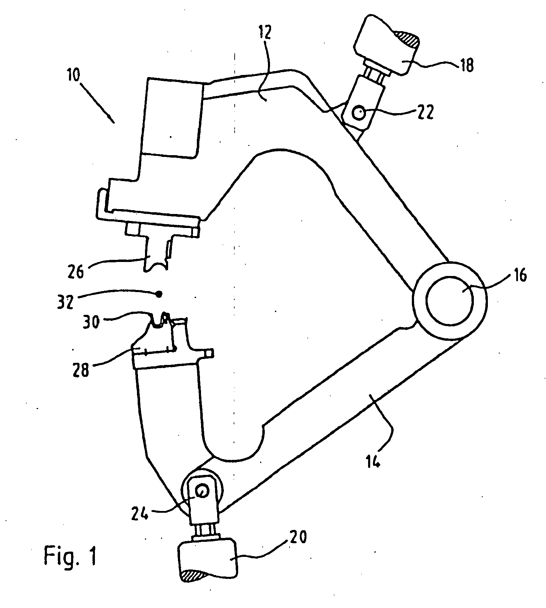

- Fig. 1: eine schematisch vereinfachte Seitenansicht eines Verschlusssystems;
- Fig. 2: eine perspektivische Darstellung zweier Paare Verdrängerelemente und deren Antriebsmechanik;
- Fig. 3A: eine schematische Seitenansicht eines Verdrängerelementepaares in ihrer Ausrichtung zu Stempel und Matrize nach dem momentanen Stand der Technik;
- Fig. 3B: eine schematische Seitenansicht eines Verdrängerelementepaares in ihrer Ausrichtung zu Stempel und Matrize in erfindungsgemäßer Ausführung;
- Fig. 4A: ein unverschlossenes Verschlusselement mit innenliegendem Schlauchzopf im Querschnitt; und
- Fig. 4B: das um den Verschlauchzopf verschlossene Verschlusselement.

Das Verschlusssystem 10 der erfindungsgemäßen Verschließmaschine weist einen oberen, linear geführten Verschließschieber 12 und einen unteren Verschließhebel 14 auf. Der obere Verschließschieber 12 wird von einem Betätiger 18 angetrieben, dessen Kraft über eine Anlenkung 22 eingeleitet wird. Der untere Verschließhebel 14 ist um eine Achse 16 schwenkbar angeordnet. Die Schwenkbewegung des unteren Verschließhebels 14 wird von einer nicht gezeigten Kurvenscheibe abgegriffen und über eine Hubstange 20, die an der Anlenkung 24 am Verschließhebel 14 angreift, auf diesen übertragen. Am oberen Verschließschieber 12 ist ein Stempel 26 befestigt und am unteren Verschließhebel 14 eine Matrize 28. In die Matrize 28 ist eine offene Verschlussklammer 30 eingesetzt. Zwischen dem Stempel 26 und der Matrize 28 mit der offenen Verschlussklammer 30 befindet sich ein zu verschließender Darmzopf 32, hier vereinfacht als Punkt dargestellt.

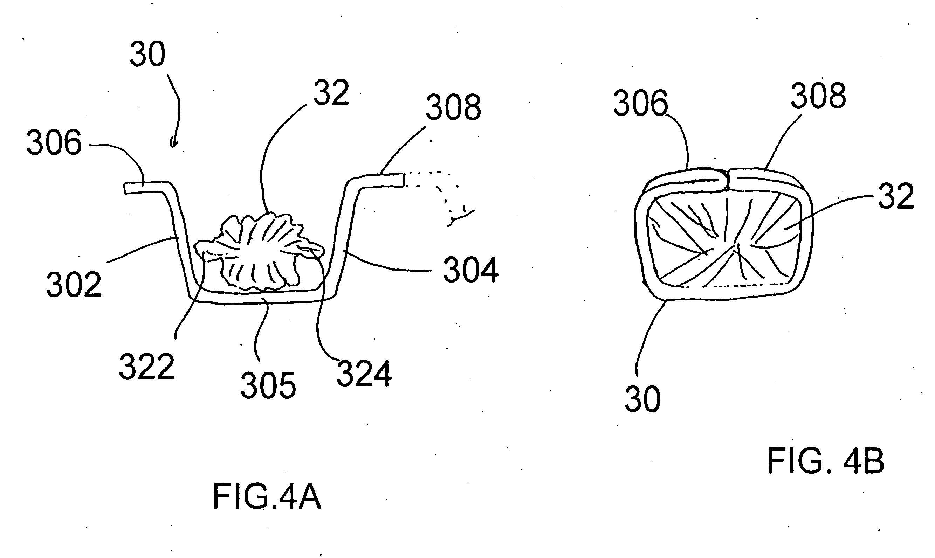

Zum Verschließen des Darmzopfes werden Stempel 26 und Matrize 28 durch eine Schwenkbewegung der Verschließhebel 12, 14 aufeinander zu bewegt und zwar so, dass zunächst die Matrize 28 mit der eingelegten Verschlussklammer 30 gegen den Zopf 32 gefahren wird, so dass dieser in den Bereich zwischen den Schenkeln 302, 304 der Verschlussklammer 30 zu liegen kommt (vgl. Fig. 4A) und unter Spannung die Verschlussklammer 30 gegen die Matrize 28 andrückt. Anschließend trifft der Stempel 26 auf die offenen Schenkel der Verschlussklammer 30 und zwar zuerst im Bereich der abgekröpften Schenkelenden 306, 308. Durch weiteres Zusammenfahren der Verschließwerkzeuge 26, 28 werden die Schenkel 302, 304 um den Darmzopf 32 herum zusammengebogen, bis die eingestellte Cliphöhe erreicht wird. In dem entsprechend eingestellten Verschlussabstand bzw. Klammer der Verschließwerkzeuge 26, 28 ist der Clip, bzw. die Verschlussklammer 30, wie in Fig. 4B dargestellt, plastisch so weit verformt, dass die abgekröpften Schenkelenden 306, 308 zusammen mit den Schenkeln 302, 304 beider Seiten stumpf gegeneinander gedrückt sind und dadurch die Verschlussklammer 30 den Schlauchzopf 32 ringförmig umgibt.

Nach dem Schließen der Verschlussklammer 30 wird der Stempel 26 und Matrize 28 wieder voneinander wegbewegt, um die mit der Verschlussklammer 30 verschlossenen Darmzopf 32 freizugeben. Dabei ermöglicht das gezeigte Verschlusssystem 10 eine vergleichsweise weite Öffnung der Verschließwerkzeuge 26, 28, so dass auch sehr große Wurstkaliber während des Füllvorgangs die Öffnung passieren können.

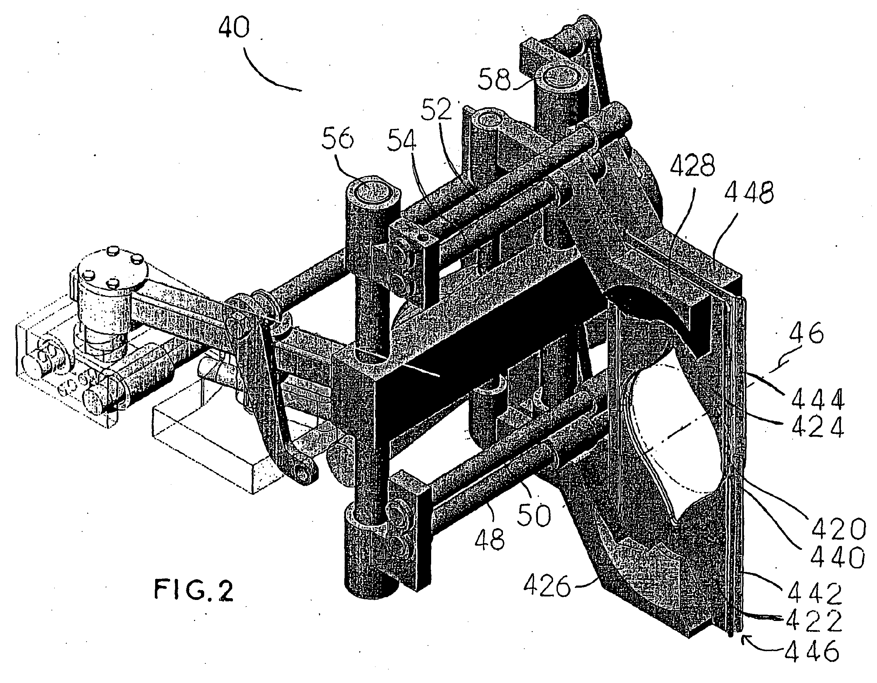

Das in Fig. 2 dargestellte Verdrängersystem 40 weist zwei Verdrängerelementepaare 420, 440 mit jeweils zwei bezogen auf die Zopf- bzw. Schlauchachse 46 radial gegenüberliegenden Verdrängerelementen 422, 424 bzw. 442, 444 auf. Die Verdrängerelementepaare 420, 440 sind einerseits in ihrer radialen Stellung geöffnet und andererseits in ihrer bezogen auf die Schlauchachse 46 axialen Stellung zusammengefahren. Dies ist die Öffnungs- oder Ausgangsstellung eines Arbeitszyklus des Verdrängersystems 40, in dem die näherungsweise V-förmige Öffnung oder Freimachung der einzelnen Verdrängerelemente 422, 424 bzw. 442, 444 einen maximalen Durchlassquerschnitt zum Passieren der gefüllten Verpackungshülle bieten.

Zum Zweck des Einschnürens werden die Verdrängerelemente 422, 424 bzw. 442, 444 radial zusammengefahren. Aufgrund der einander zugewandten, im wesentlichen V-förmigen Freimachung der jeweils scherenartig zusammenwirkenden Verdrängerelemente 422, 424 bzw. 442, 444 wird der Durchlassquerschnitt kontinuierlich eingeengt, bis die befüllte schlauchförmige Verpackung lokal im wesentlichen auf den Querschnitt des bloßen Verpackungsschlauchmaterials eingeschnürt ist. Nachfolgend werden die Verdrängerelementepaare 420, 440 im eingeschnürten Zustand axial auseinanderbewegt, so dass das Füllgut in einem ausreichend großen axialen Abschnitt verdrängt wird und sich auf diese Weise ein Schlauchzopf 32 der erforderlichen Länge bildet.

Die Bewegungen werden wahlweise aus einer Drehbewegung mittels einer Kurbel oder Kurvenscheibe abgeleitet oder von Fluid betriebenen (vorzugsweise pneumatischen) Zylinderkolbenanordnungen erzeugt und auf die einzelnen Verdrängerelemente 422, 424 bzw. 442, 444 übertragen. Die Verdrängerelemente 422, 424 bzw. 442, 444 sind hierzu jeweils einzeln an ihren schlauchzopffernen Enden an Armen 426, 428 bzw. 446, 448 befestigt (vgl. Fig. 2). Die Arme 426, 428 bzw. 446, 448 sind auf horizontalen Führungsstangen 48, 50, 52, 54 gleitend gelagert, so dass eine stabile Horizontalbewegung gewährleistet ist. Die Anordnung horizontaler Führungsstangen 48, 50, 52, 54 ist ihrerseits an vertikalen Führungsstangen 56, 58 gleitend gelagert, um eine definierte Einschnürbewegung zu gewährleisten.

Ist der oben geschilderte Spreizzustand erreicht, wird in der zuvor beschriebenen Weise mittels der Verschließelemente 26, 28 der Clip 30 um den Schlauchzopf 32 verschlossen. Danach werden die Verdrängerelemente 422, 424 bzw. 442, 444 einerseits radial auseinander- und andererseits axial wieder zusammengefahren. Diese beiden Bewegungen können vollständig gleichzeitig, überlappend oder nacheinander ausgeführt werden. Danach ist der in Fig. 2 gezeigte Öffnungs- oder Ausgangszustand wieder erreicht.

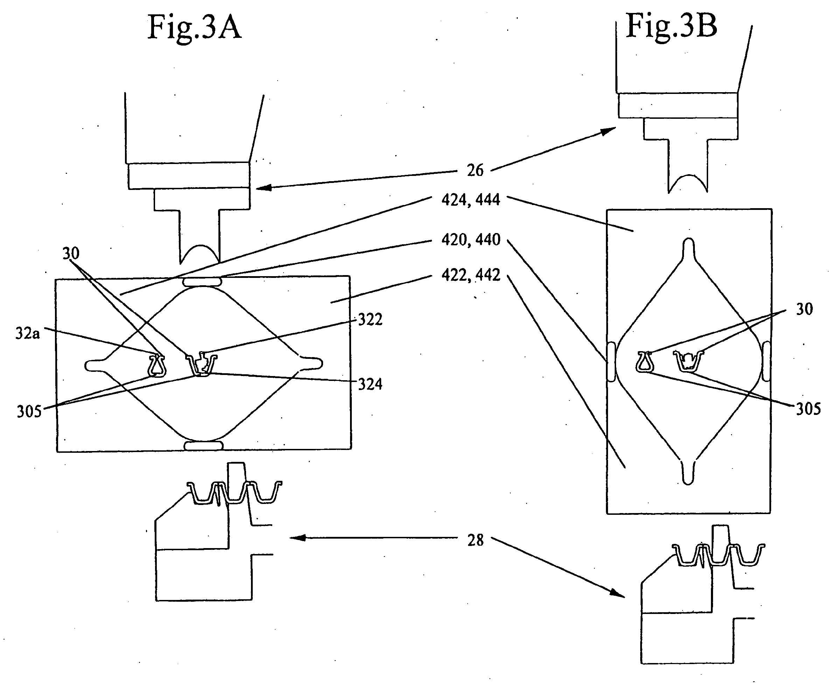

Der in Fig.3A dargestellte Zustand des Zopfes 32 verdeutlicht zum einen das in der Beschreibungseinleitung geschilderte Problem der Entraffung oder "Fähnchenbildung", welches seinen Ursprung im Bereich des radialen Überlappens der jeweils zusammenwirkenden Verdrängerelemente 422, 424 bzw. 442, 444 hat und aufgrund der axialen Spreizbewegung und den Gleiteigenschaften des Verpackungshüllenmaterials und der Verdrängerelemente 422, 424 bzw. 442, 444 begünstigt wird. Hierdurch bilden sich die seitlichen Aufweitungen 322, 324 des gerafften Schlauchzopfes 32 (siehe auch Fig.4), die bewirken, dass die Klammerschenkel beim Umbiegen unter Umständen eine Falte 32a des Zopfes 32 einklemmen und beschädigen könnten. Aufgrund der erfindungsgemäßen Anordnung der Verdrängerelementepaare 420, 440, wie in Fig.3B dargestellt, liegen diese Aufweitungen 322, 324 jedoch im wesentlichen in der Ebene des Klammerrückens 305, so dass sie beim Verschließen der Verschlussklammer 30 nicht von den Schenkelenden 306, 308 eingeklemmt werden.

### Bezugszeichenliste

- 10: Verschlusssystem
- 12: oberer Verschließschieber
- 14: unterer Verschließhebel
- 16: Drehpunkt
- 18: Betätiger
- 20: Hubstange
- 22: Anlenkung
- 24: Anlenkung
- 26: Stempel/zweites Verschließwerkzeug
- 28: Matrize/erstes Verschließwerkzeug

- 30: Verschlussklammer/Clip
- 302: Schenkel
- 304: Schenkel
- 305: Klammerrücken
- 306: (abgekröpftes) Schenkelende
- 308: (abgekröpftes) Schenkelende
- 32: Schlauchzopf
- 32a: eingeklemmte Schlauchfalte
- 322: Aufweitung
- 324: Aufweitung

- 40: Verdrängersystem
- 420: Verdrängerelementepaar
- 422: Verdrängerelement
- 424: Verdrängerelement
- 426: Arm
- 428: Arm
- 440: Verdrängerelementepaar
- 442: Verdrängerelement
- 444: Verdrängerelement
- 446: Arm
- 448: Arm
- 46: (Schlauch)-Achse
- 48: horizontale Führungsstange
- 50: horizontale Führungsstange
- 52: horizontale Führungsstange
- 54: horizontale Führungsstange
- 56: vertikale Führungsstange
- 58: vertikale Führungsstange

## Patentansprüche

1. Clipmaschine zum Abteilen und Verschließen einer mit Füllgut befüllten schlauchförmigen Verpackung mit wenigstens zwei bezogen auf die Achse (46) des Verpackungsschlauches axial beabstandeten Paaren (420, 440) von radial gegenüberliegenden Verdrängerelementen (422, 424; 442, 444), welche mit einer Linearführung (56, 58) verbunden und eingerichtet sind, zum lokalen Einschnüren der gefüllten Verpackung und Bilden eines Schlauchzopfes (32) radial linear aufeinander zu und anschließend paarweise axial auseinander gefahren zu werden, einem schwenkbar angeordneten ersten Verschließwerkzeug (28) und einem zweiten Verschließwerkzeug (26), wobei das erste und das zweite Verschließwerkzeug (26, 28) eingerichtet sind, zum Setzen und Verschließen wenigstens einer Verschlussklammer (30) um den gebildeten Schlauchzopf (32) zwischen den axial auseinander gefahrenen Verdrängerelementepaaren (420, 440) radial aufeinander zu gefahren zu werden, **dadurch gekennzeichnet, dass** die radiale Bewegungsrichtung der Verdrängerelementepaare (420, 440) im wesentlichen mit der radialen Bewegungsrichtung der Verschließwerkzeuge (26, 28) zusammenfällt.

2. Clipmaschine nach Anspruch 1,
**dadurch gekennzeichnet, dass** das erste Verschließwerkzeug (28) an einem ersten, unteren Verschließhebel (14) befestigt und mit diesem schwenkbar gelagert und angetrieben ist.

3. Clipmaschine nach Anspruch 2,
**dadurch gekennzeichnet, dass** das zweite Verschließwerkzeug (26) mit einer Linearführung (12) verbunden ist.

4. Clipmaschine nach einem der vorstehenden Ansprüche,
**gekennzeichnet durch** eine Steuerung, die eingerichtet ist, die Verschließwerkzeuge (26, 28) zeitlich überlappend mit der radialen Zufahrbewegung und/oder der axialen Auseinanderfahrbewegung der Verdrängerelementepaare (420, 440) radial aufeinander zu zu fahren.

## Claims

1. Clipping machine for separating and sealing a tubular package filled with a charge, comprising at least two pairs (420, 440) of radial opposite displacement elements (422, 424; 442, 444) axially spaced in relation to the axis (46) of the package tube and coupled with a linear guiding (56, 58) and arranged to be linearly moved in a radial direction to each other for locally constricting the filled package and forming a tube plait (32) and subsequently to be axially moved in pairs in a direction apart from each other, a first sealing tool (28) and a second sealing tool (26) arranged in a pivotable manner, wherein the first and the second sealing tool (26, 28) are arranged to be moved radially together between the axially moved apart displacement elements (420, 440) for setting and sealing of at least one sealing compartment (30) around the formed tube plait (32),
**characterized in that** the radial moving direction of the displacement element pairs (420, 440) substantially coincides with the radial moving direction of the sealing tools (26, 28).

2. Clipping machine according to claim 1,
**characterized in that** the first sealing tool (28) is mounted to a first lower sealing lever (14), and is supported and driven with the latter in common in a pivotable manner.

3. Clipping machine according to claim 2,
**characterized in that** the second sealing tool (26) is coupled to a linear guiding (12).

4. Clipping machine according any one of the preceding claims,
**characterized by** a controller arranged to radially move the sealing tools (26, 28) in a direction to each other and in a temporally overlapping manner with the radial movement of the displacement elements (420, 440) in a direction to each other and/or the axial movement of the latter in a direction apart from each other.

## Revendications

1. Machine d'agrafage pour diviser et fermer un emballage en forme de boyau rempli de produit de remplissage, comprenant au moins deux paires (420, 440) à distance axialement, rapportée à l'axe (46) du boyau d'emballage, d'éléments (422, 424 ; 442, 444) d'embossage opposés radialement, qui sont reliés à un guidage (56, 58) linéaire et qui, pour pincer localement l'emballage rempli et pour former une tresse (32) de boyau, sont déplacés l'un sur l'autre radialement linéairement et ensuite éloignés axialement par paire, un premier outil (28) de fermeture monté pivotant et un deuxième outil (26) de fermeture, le premier et le deuxième outil (26, 28) de fermeture étant agencés, afin de mettre et de fermer au moins une agrafe (30) de fermeture autour de la tresse (32) de boyau formée, pour être déplacés l'un sur l'autre radialement entre les paires (420, 440) d'éléments d'embossage éloignés axialement l'un de l'autre,
**caractérisée en ce que** la direction radiale de déplacement des paires (420, 440) d'éléments d'embossage coïncide sensiblement avec la direction radiale de déplacement des outils (26, 28) de fermeture.

2. Machine d'agrafage selon la revendication 1,
**caractérisée en ce que** le premier outil (28) de fermeture est fixé sur un premier levier (14) inférieur de fermeture et est monté pivotant et entraîné avec celui-ci.

3. Machine d'agrafage selon la revendication 2,
**caractérisée en ce que** le deuxième outil (26) de fermeture est relié à un guidage (12) linéaire.

4. Machine d'agrafage selon l'une des revendications précédentes,
**caractérisée par** une commande qui est agencée pour déplacer, en les mettant radialement l'un sur l'autre, les outils (26, 28) de fermeture à chevauchement dans le temps avec le mouvement de rapprochement radial et/ou le mouvement d'éloignement axial des paires (420, 440) d'éléments d'embossage.
